# EUROPEAN PATENT SPECIFICATION

(11) **EP 1 443 776 B1**
(45) Date of publication and mention of the grant of the patent: **15.08.2012**
(21) Application number: 03001860.0
(22) Date of filing: 29.01.2003
(51) Int. Cl.: H04N 17/00, H04N 7/26, H04N 7/24

(54) **Video signal processing system**
Videosignalverarbeitungssystem
Sytème de traitement de signal vidéo

(43) Date of publication of application: 04.08.2004
(73) Proprietor: Sony Deutschland GmbH, 10785 Berlin (DE)
(72) Inventor: Zimmermann, Klaus, c/o Stuttgart Technology Center, Hedelfingerstr. 61, 70327 Stuttgart (DE); Wagner, Peter, c/o Stuttgart Technology Center, Hedelfingerstr. 61, 70327 Stuttgart (DE); Erdler, Oliver, c/o Stuttgart Technology Center, Hedelfingerstr. 61 70327 Stuttgart (DE)
(74) Representative: Müller - Hoffmann & Partner

(56) References cited:
- EP-A- 0 932 306
- EP-A- 1 102 493
- EP-A1- 1 244 312
- DE-A- 10 129 635
- US-A- 5 638 139
- US-A- 5 754 248
- US-A1- 2001 021 224
- US-A1- 2001 026 630

## Description

The present invention relates to a video signal processing system, a video signal transmitter and a video signal receiver.

Usually, a sophisticated digital picture processing system consists of several distinct and separated modules like e.g. frame rate conversion, interlaced to progressive conversion, noise reduction and picture enhancement. Each of this blocks usually needs some analysis information to achieve highest quality. These analysis blocks are mostly integrated into the respective picture processing components

Therefore, the video processing system is typically considered as a sequence or concatenation of equally important modules where the output of one module is input to the next module.

On the other hand, several approaches propose hardware implementations of a motion estimator utilised for upconversion and noise reduction processes inside a pure analog video receiver. The principal idea of these implementations is to derive and utilise one set of motion vectors for these two processing stages. The use cases utilising this approach are restricted to uncompressed video signals.

Further, research has been performed in the area of motion estimation for MPEG2 coding using true-motion vectors. These approaches however are typically not implemented in state-of-the art designs. Systems which make use of inter-frame video compression generally perform block matching between pairs of fields or frames within the group of pictures (GOP) or video object planes (VOB).

Therefore, state of the art video signal processing systems employ up to three different motion estimators in the cascade of processing stages, noise reduction, encoding, and format conversion. As set out above, these motion estimators work independently and do not share any resources or information with each other. Furthermore, the motion estimators are typically based on different motion estimation algorithms resulting in picture quality degradations introduced by the different motion vector information generated by the motion estimators.

This is especially true when it comes to video coding. Traditional inter-frame video encoders estimate motion within a group of pictures or video object planes. This method however does not estimate the "true" motion of objects between fields or frames.

Furthermore, a state of the art system consisting of a noise reducer, a video encoder, and a format converter estimate motion at least twice in two different modules, namely once in the transmitter and once in the receiver.

In EP 1 244 312 Al describes a system for assessing the quality of audiovisual material by measuring the audio and video quality and computing from these a combined measure. Using a parameter indicative of the degree of motion represented by the video, the computation employs one of a plurality of algorithms selected in dependence on the value of the parameter.

It is the object underlying the present invention to provide a video processing system, a video signal transmitter, and a video signal receiver which allow a more efficient use of system resources.

This object is solved by a video signal processing system according to the present invention as defined in claim 1. Preferred embodiments thereof are respectively defined in the respective dependent claims.

The video signal processing system according to the present invention comprises a video signal or picture analysis module (VSAM) which is adapted to realize - in particular all - video signal or picture analysis processes with respect to received video data in concentrated and/or centralized form. Further a video signal or picture processing module (VSPM) is provided which is adapted to realize - in particular all - video signal or picture processing processes with respect to received video data in concentrated and/or centralized form.

It is a basic idea of the present invention to concentrate and/or centralized the respective video signal or picture analysis capabilities within a single video signal or picture analysis module (VSAM) and to concentrate and/or centralized the respective video signal or picture processing capabilities within a single video signal or picture processing module (VSPM).

According to the present invention, said video signal or picture analysis module (VSAM) comprises - in particular all - video signal or picture analysis components in concentrated and/or centralized form, in particular motion estimation and/or segmentation according to claim 1.

Additionally or alternatively, said video signal or picture processing module (VSPM) comprises - in particular all - video signal or picture processing components in concentrated and/or centralized form, in particular motion estimation and/or segmentation components, in particular frame rate conversion and/or picture improvement components.

According to an advantageous embodiment a video meta data transmission channel is provided which is adapted to connect said video signal or picture analysis module (VSAM) and said video signal or picture processing module (VSPM) so as to enable an exchange of video meta data.

In other words, an embodiment of the video signal processing system according to the present invention comprises a video signal transmitter and a video signal receiver which are connected by a video signal transmission channel, according to the present invention additionally comprises a video information transmission channel between the video signal transmitter and the video signal receiver.

The video signal transmitter according to the present invention comprises a video signal or picture analysis module (VSAM) as a global analysis module for analysing an incoming video signal and providing video information corresponding thereto to at least one video pre-processing stage within a video signal transmitter or a video signal or picture analysis module (VSAM) and/or via a video information or video meta data channel to at least one video signal processing stage within a video signal receiver or a video signal picture processing module (VSPM).

The video signal receiver according to the present invention comprises at least one video signal or picture processing module (VSPM) as a processing module for processing a video signal received from a video signal transmitter or a video signal or picture analysis module (VSAM) based on video information received from said video signal transmitter or said video signal or picture processing module (VSPM).

Therefore, according to the present invention, it is possible that video information, i.e. results of analysing the video signal, e.g. for noise reduction, encoding and format conversion, is not only handled inside respective modules and crosses the module boundaries as well as a passing of video information from the video signal transmitter to the video signal receiver.

According to the present invention a structure is provided to replace the picture analysis processing steps which are distributed among the respective components in current state of the art systems by a centralised, i.e. global, analysis. Therefore, e.g. a spatial matching process in an interlaced to progressive conversion filter, which determines the orientation of an edge before the actual interpolation is done, produces results, which are then also available to e.g. an noise reduction component or a frame rate conversion component.

Therefore, according to the present invention, the analysis information needed by the several modules of a sophisticated digital picture processing system can be used also by other modules from the processing chain, i.e. no analysis processing steps are done twice in a similar way (e.g. motion estimation and motion detection). Therefore, an effective utilisation of resources is achieved.

E.g. the computational overhead of the motion estimation approach in state of the art systems is evident. This becomes even more evident when the relative complexity of a motion estimator is considered compared to the other video processing modules in the system. The motion estimator is typically the most complex module and is largely responsible for the overall picture quality.

Another example is the computational overhead of noise reduction in state-of the art systems which is proportional to the quality of the noise reduction modules employed by the system. According to the present invention a high quality noise reduction might be employed distributed in the system, while the picture analysis for this noise reduction is performed centralised.

In the video signal processing system according the present invention preferably said video information transmission channel comprises a forward channel to transmit video meta data from the video signal transmitter or said video signal or picture analysis module (VSAM) to the video signal receiver or said video signal or picture processing module (VSPM).

In the video signal processing system according the present invention further preferably said video meta data comprises picture analysis information to process a video signal on the video signal receiver side or the side of said video signal or picture processing module (VSPM).

In the video signal processing system according the present invention said video information transmission channel comprises a backward channel to transmit video quality data from the video signal receiver or video signal or picture processing module (VSPM) to the video signal transmitter or video signal or picture analysis module (VSAM).

In the video signal processing system according the present invention further preferably said video quality data provides a respective feedback to video meta data received by the video signal receiver or picture processing module (VSPM) from the video signal transmitter or video signal or picture analysis module (VSAM).

In the video signal processing system according the present invention alternatively or additionally further preferably said quality data comprises picture quality information to pre-process a video signal on the video signal transmitter side or the side of said video signal or picture analysis module (VSAM).

In the video signal transmitter according to the present invention preferably said global analysis module comprises a motion estimator, and/or an edge detector, and/or a noise measurement unit, and/or a film mode detector, and/or a histogram calculation unit, and/or a block detector, and/or a segmentation unit.

In the video signal transmitter according to the present invention alternatively or additionally preferably said global analysis module comprises a video meta data encoder to encode said video information into video meta data.

In the video signal transmitter according to the present invention further alternatively or additionally preferably said global analysis module adapts its parameter settings according to received picture quality information to improve its analysis functionality.

The video signal transmitter according to the present invention preferably additionally comprises at least one pre-processing stage adapted to receive video analysis information and to pre-process an incoming video signal according to said received video information before said video signal is transmitted to a video signal receiver.

In this case, in the video signal transmitter according to the present invention preferably said least one pre-processing stage comprises a noise reducer, and/or a video encoder.

Further this case, in the video signal transmitter according to the present invention alternatively or additionally preferably said least one pre-processing stage comprises a video meta data decoder.

In the video signal receiver according to the present invention preferably said at least one processing module comprises a video meta data decoder to decode said video information from received video meta data.

In the video signal receiver according to the present invention alternatively or additionally preferably said at least one processing module provides picture quality information as feedback to said video information to said video signal transmitter.

In the video signal receiver according to the present invention further alternatively or additionally preferably said at least one processing module comprises a video format converter, and/or a frame rate converter, and/or an interlaced to progressive converter, and/or a noise reducer, and/or a picture improvement unit, and/or a de-blocking unit.

Further features and advantages of the video signal processing system, the video signal transmitter, and the video signal receiver according to the present invention will become more apparent from the following description of exemplary embodiments thereof taken in conjunction with the accompanying figures.
- **Fig. 1**: is a schematic block diagram demonstrating basic principles of the present invention.
- **Fig. 2**: shows a first embodiment of a video signal processing system according to the present invention.
- **Fig. 3**: shows a principle block diagram of the picture analysis component shown in Fig. 2.
- **Fig. 4**: shows a principle block diagram of the picture processing component shown in Fig. 2.
- **Fig. 5**: shows a general audio/video processing system to which a second embodiment of a video signal processing system according to the present invention is applicable.
- **Fig. 6**: shows a common motion estimator of the second embodiment of a video signal processing system according to the present invention in the general audio/video processing system shown in Fig. 5.
- **Fig. 7**: shows the decoder side of the second embodiment of a video signal processing system according to the present invention in the general audio/video processing system shown in Fig. 5.

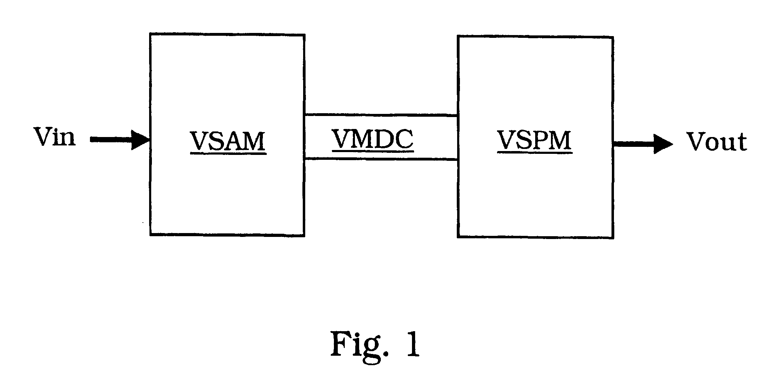

First of all, basic principles of the present invention are described taking reference to the block diagram of figure 1. The video processing system according to the present invention comprises a video signal or picture analysis module VSAM which is adapted to realize all video signal or picture analysis processes with respect to received video data Vin in concentrated and/or centralized form. Also, a video signal or picture processing module VSPM is provided which is adapted to realize all video signal or picture processing processes with respect to said received video data Vin in concentrated and/or centralized form.

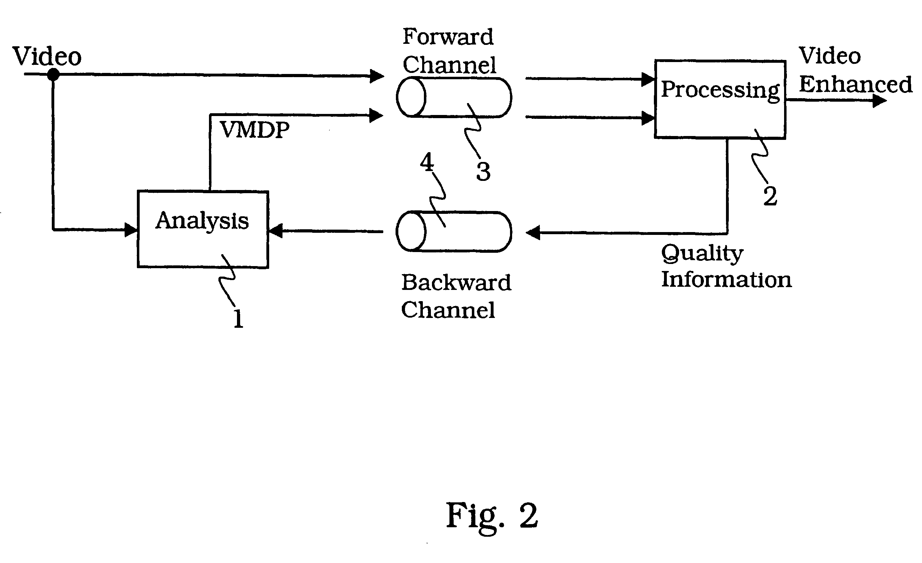

According to the present invention a digital picture processing system is categorised into analysis parts, preferably one, and into picture processing parts and the respective ones are centralised. Fig. 2 gives an overview of a first preferred embodiment of the system according to the present invention.

Incoming video data is passed to a central picture analysis block 1 and - via an optional forward channel 3 - to a picture-processing block 2. A communication between the central picture analysis block 1 and the picture-processing block 2 to transmit results of the picture analysis is done across a Video Meta Data Stream, which contains all available picture analysis information, organized by a Video Meta Data Protocol (VMDP). The Video Meta Data is synchronous to the video data and the Video Meta Data Stream also passes through the forward channel 3.

Fig. 2 shows that the analysis block 1 and the picture-processing block 2 don't have to be necessarily within the receiver, i.e. don't have to be necessarily on the same side of the transmission channel, here the forward channel 3. As shown, it is also possible that picture analysis is already done on the producer/sender side and that all analysis information is transferred as Video Meta Data via the transmission channel.

As further shown in Fig. 2, the system may contain a back-path, i.e. a backward channel 4, from the processing component, i.e. the picture-processing block 2, to the analysis component, i.e. the analysis block 1. This backward channel 4 might carry information about the quality of the improved picture or about the quality of the analysis information. With this information, the analysis component can adapt its parameter settings to improve them accordingly.

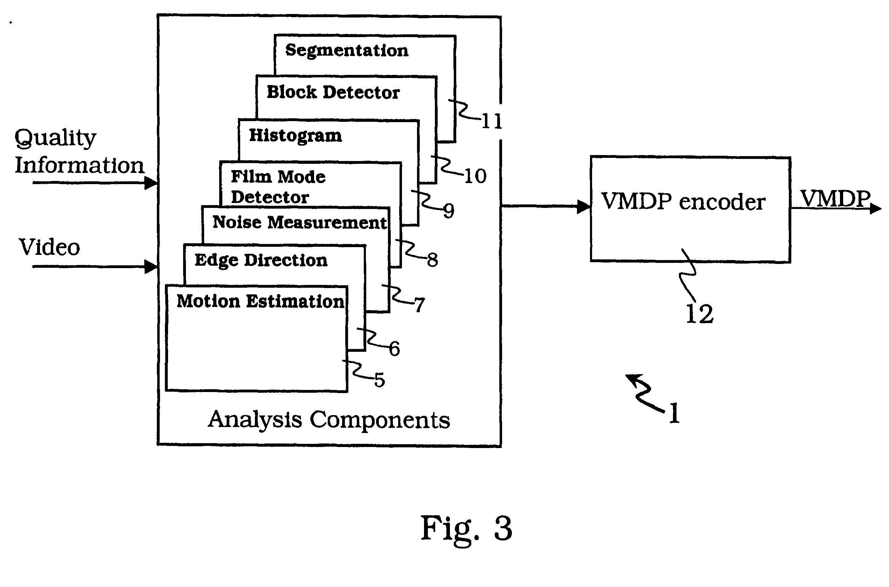

Fig. 3 shows the analysis block 1. It consists of a VMDP encoder 12 and analysis components, such as a motion estimator 5, an edge detector 6, a noise measurement unit 7, a film mode detector 8, a histogram building unit 9, a block detector 10, and a segmentation unit 11 which all receive the video signal and the quality information. There can be other analysis components as well. The single analysis components may also use results from other ones. In case a system with lower quality expectations is wanted, some components maybe left out. It is also possible to apply simpler or more sophisticated algorithms, depending on the expectations in terms of quality and cost. The VMDP encoder 12 collects the complete analysis information (also referred to as video information) and transfers it according to the video meta data protocol into video meta data. In case a component is left out, the protocol part, which carries the respective information might be set to a default value, e.g. in case the motion estimator is left out, vectors might be set to zero values.

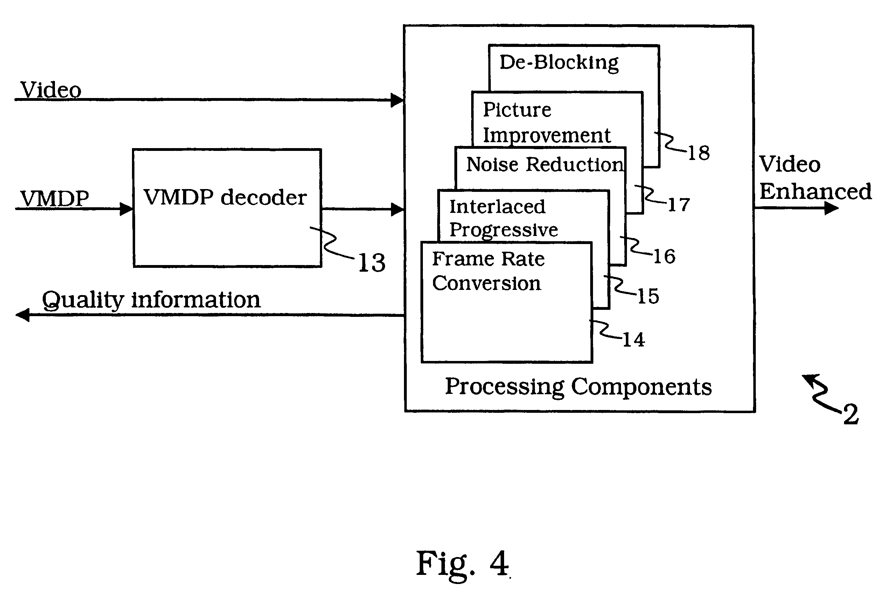

Fig. 4 shows the block diagram of the picture-processing block 2. It consists of a VMDP decoder 13 and processing components, such as a frame rate converter 14, an interlaced to progressive converter 15, a noise reducer 16, a picture improvement unit 17, and a de-blocking unit 18. In terms of scalability, the same is true as for the analysis block 1. The VMDP decoder 13 decomposes the meta data according to the protocol and transfers the meta data to the picture processing modules.

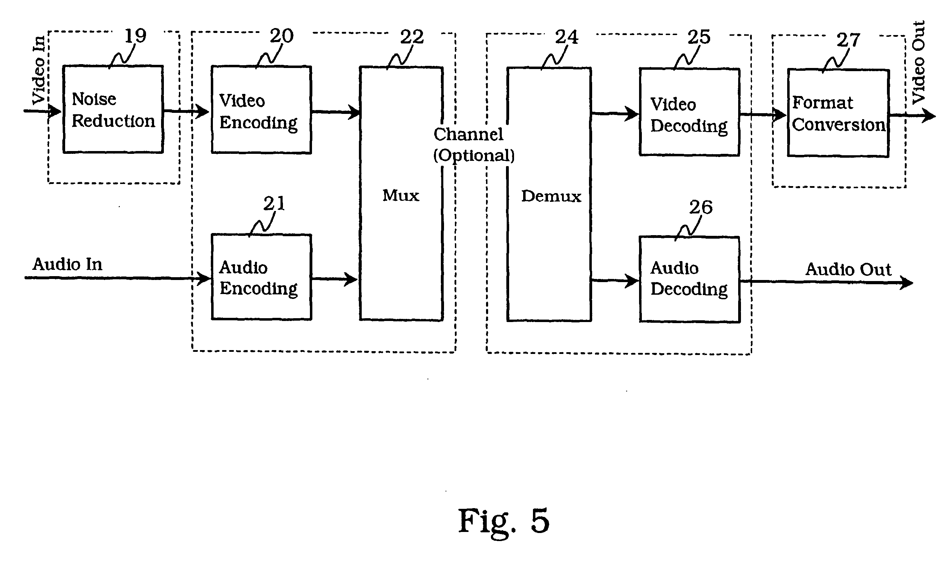

The basic idea of the invention is further elucidated in connection with Figs. 5 to 7 by way of a second embodiment according to the present invention showing the harmonisation of temporal prediction by utilisation of a common motion estimator for different video processing stages in a video system.

A corresponding general video system to which the second embodiment according to the present invention might be applied is shown in Fig. 5. An incoming video signal is supplied to a noise reducer 19 which passes the noise reduced video signal to a video encoder 20 before it is input to a multiplexer 22 which additionally receives a supplied audio signal via an audio encoder 21. The multiplexer 22 multiplexes both input signals, i.e. the noise reduced video encoded video signal and the audio encoded audio signal, and transmits them - via an optional channel 23 - to a demultiplexer 24. Multiplexer and demultiplexer may also be an option. The demultiplexer 24 demultiplexes the encoded video signal and the encoded audio signal and supplies them to respective decoders, i.e. the encoded video signal to a video decoder 25 and the encoded audio signal to an audio decoder 26. The audio decoder 26 outputs the decoded audio signal, and via a format converter 27 the video decoder 25 outputs the decoded video signal.

The global analysis module according to the present invention, in this case the motion estimator which is preferably generating true-motion vectors, passes its analysis results, i.e. video information, here the (true) motion vectors. to the different processing stages in a video processing system. The processing stages may consist of the noise reducer 19, the video encoder 20, and the format converter 27, as they are shown in Fig. 5. These processing stages have the following functionality:

Noise reducer 19: Reduces noise from an analog input signal by applying a temporal filter and an optional spatial filter.

Video encoder 20: Compresses the video signal in spatial and temporal direction. Format converter 27: Converts the format of the video signal to match the desired output format. This includes the output to a progressive display.

The embodiment of Fig. 5 may be designed as a single device.

A full-blown video processing system employs all of these processing stages simultaneously. Fig. 5 shows a potential embodiment of such a system; a personal video recorder (PVR) style application comprising a noise reducer 19, a video encoder 20 and a format converter 27. An analog signal is input to the system. In the first step the signal is noise-filtered. The second step is encoding the signal applying e.g. inter-frame coding. The output of the video encoder is multiplexed with the output of an optional audio encoder and a transport/program stream is created. The multiplexed stream is possibly stored on a storage medium and eventually input to a demultiplexer 24 that splits the video and audio data into two separate streams and a private stream. The video data stream is input to a video decoder 25. The video decoder 25 restores the base band video signal. The output of the video decoder 25 is finally matched to the desired output format of the system in the format converter 27. Similarly, the audio stream is input to an audio decoder 26, which decodes the stream and then outputs the uncompressed audio data.

According to the present invention a common set of motion vectors is employed in various video processing stages. High-quality video noise reducers and video format converters typically employ motion compensation as a technique to trace moving objects in a video sequence. Video coding algorithms are typically based on motion-compensation, too, in case they utilise inter-frame prediction. The proposed system according to the present invention makes use of a common motion estimator and feeds the derived motion vectors to the various modules applying motion estimation as part of their processing routine.

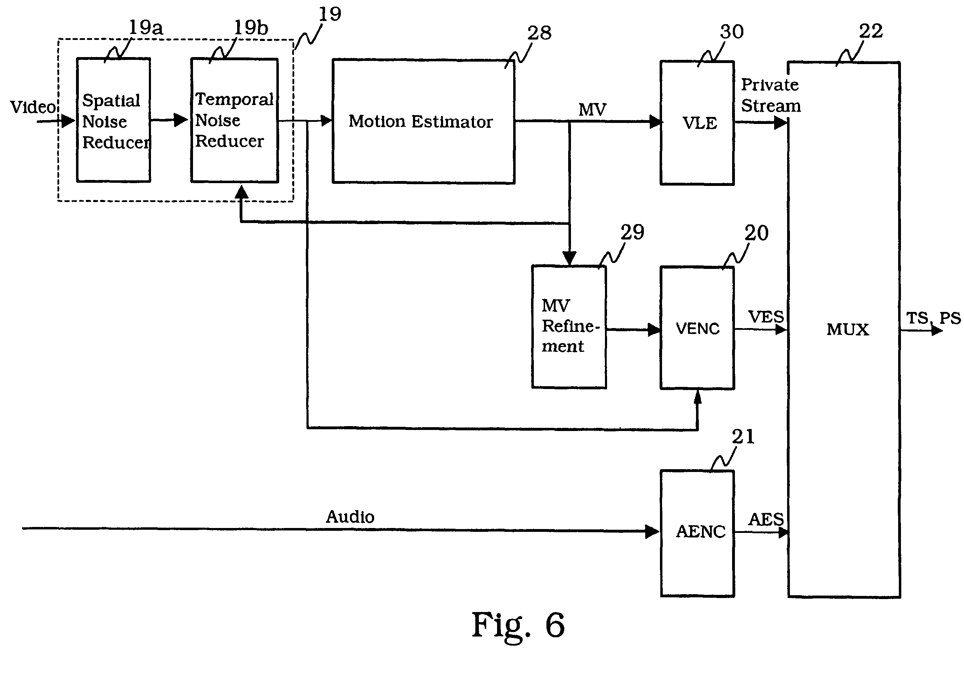

Fig. 6 shows a block diagram of the proposed solution to estimate the motion and distribute the motion vectors for the PVR-style application. A common motion estimator 28 lies at the heart of the system. This motion estimator 28 provides motion vectors to the noise reducer 19, the video encoder 20 and the video format converter 27. The noise reducer 19, which in this case consists of a spatial noise reducer 19a and a temporal noise reducer 19b which receives the motion vectors, and the video format converter 27 input these vectors directly.

The motion vectors may be refined by an optional motion vector refinement unit 29 in case they are fed to the video encoder 20 to improve the vector quality. This step includes the refinement of the motion vectors to produce suitable motion vectors for the encoding stage, i.e. the video encoder 20. The video encoder 20 hence utilises motion vectors between successive fields and does not rely on motion vectors between pairs of fields or frames within a GOP/VOP. The refinement of the motion vectors can either be integrated in the motion estimator or it can be added as a separate module, i.e. the motion vector refinement unit 29, as shown in Figure 6. The refined motion vectors become part of the video syntax and are inserted into the video elementary stream.

The motion-compensated noise reducer 19 filters the analog signal. The temporal noise filter 19b makes direct use of the motion vectors generated by the motion estimator 28. The noise reducer 19 may apply a spatial filter 19a, too. One advantage of the proposed system is the use of a single noise reducer 19 for the analog video signal.

Since the video format converter 27 is applied after the video decoder 25 when the video baseband signal has been restored, the motion vectors for the format converter are either stored locally or - in case of a transmission channel 23 - transmitted to a receiver. It is desirable to minimise the data size of these motion vectors in storage or transmission applications. Hence, the motion vectors may be compressed by a motion vector encoder 30 utilising a loss-less data compression technique such as variable length encoding (VLE) possibly in combination with run-length coding (RLC). Loss less compression techniques can typically decrease the data size by a factor of around 6. One of the advantages of the proposed system is the fact that many video codecs (encoder/decoder systems) contain a coprocessor for variable length encoding/decoding (VLX). An efficient implementation will utilise this coprocessor for video coding and motion estimation vector coding purposes. The coprocessor can run in parallel to the processing on the main processor. The VLX computation therefore utilises an idling coprocessor and is not increasing the computational load on the main processor.

Once the motion vectors are compressed, they are multiplexed into the transmitted/stored bit stream as private stream data together with the video elementary stream and an optional audio elementary stream. Since the maximum number of motion vectors per video frame is known, an upper limit for the number of allocated bits per frame can be derived. A 16 x 16 block size applied in the motion estimation process for a PAL signal for example will result in an effective data rate of approximately 100kbps. The upper limit may be used to derive a constant bit rate for this private stream. The bit rate of the multiplexed stream is slightly increased due to the additional private stream in the transport layer. The multiplexed stream then may either be stored locally or transmitted to a receiver. The proposed system may be extended to handle multiple video streams simultaneously. The system may either output multiple transport/program streams or combine all streams into a single multiplexed stream.

Of course, a combination with the first embodiment of the present invention is also possible, in which case a VMDP encoder would be used to encode the compressed or uncompressed motion vectors.

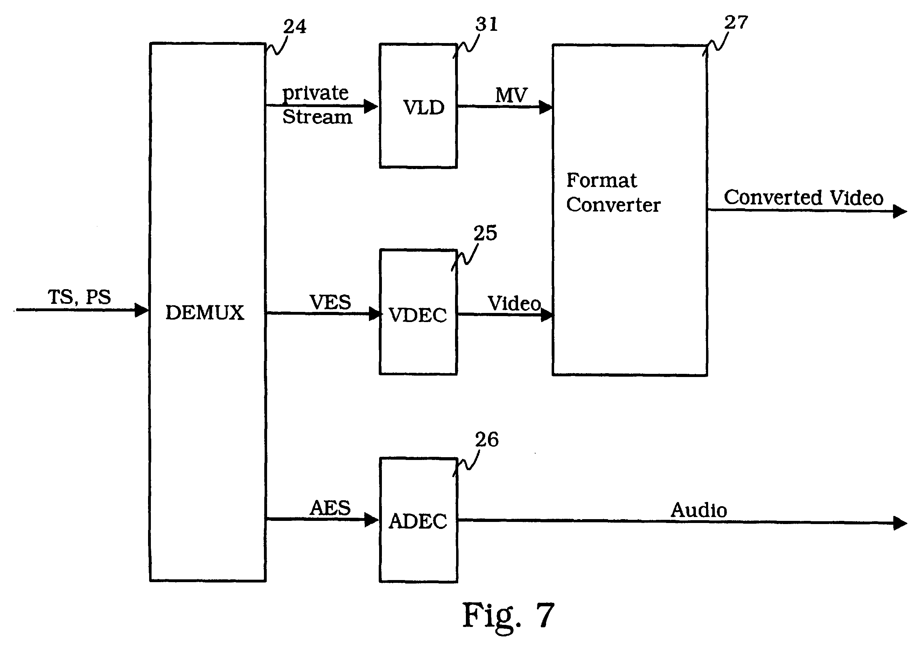

As shown in Fig. 7, at the decoder side the transport/program stream(s) is demultiplexed by the demultiplexer 24. The various demultiplexer outputs, i.e. the private stream carrying the motion vectors, the encoded video signal, and the encoded audio signal, are fed to the respective decoders, i.e. a motion vector decoder 31, the video decoder 25, and the audio decoder 26. The private stream containing the compressed motion vectors for the format converter 27 is input to the video decoder 25 which in this case has a decompressor functionality. Ideally, the variable length decoding (VLD) is utilising the same resources as the video decoder 25. The format converter 27 then applies the decompressed motion vectors to the baseband video signal restored by the video decoder 25. Similarly to the encoder side, the VLD can be run in parallel to the format conversion processing on the main processor.

The proposed system is highly suitable for a PVR-style application. The block diagram of such an application exactly corresponds to Figure 5. The video signal is always encoded and then decoded even in the live mode. It should be emphasised that also various subsets of the embodiment described by Fig. 5 are covered by the invention. For example, a video system without encoder/decoder blocks 20, 25 is covered, as well. Further, the encoding process might be applied at the broadcaster side so that the compressed digital stream arrives at the receiver side containing a video elementary stream and an associated supplementary private stream containing the true motion vector data.

The advantage of the solution according to the present invention is that no processing steps are done twice. This reduces the computational load of the system or the computational resources can be concentrated. In this way, the system resources are used more effectively, e.g. the picture quality can be improved by the utilisation of a common motion estimator generating true-motion vectors. Also system cost can be reduced due to skipping redundant processing steps and the complexity of the overall system is reduced, since the resources might be shared, i.e. less components are required, e.g. a single common motion estimator for the encoding and the format conversion parts are used.

Further, the complete analysis information can be made available to all picture-processing components which might also lead to an improvement of the overall picture quality, e.g. by the harmonisation of motion vector information utilised by the different video processing stages. Generally, the picture-processing components can exploit all information or only parts of it, depending of their nature. This can increase the achievable picture quality, because analysis information, which was not accessible before can be utilised now.

Moreover, the system is scalable, because it is possible the leave out some of the analysis components without changing the picture processing module. In this way, it is straightforward to design and realize processing chains for devices, where only the mid-range or low-end picture quality is expected. This can reduce the time-to-market.

Still further, computation load can be shifted from the client side to the server side, e.g. the motion estimation necessary for the noise reduction and the format conversion processes.

An example is that high end 100 Hz TVs require motion compensated frame rate conversion whereas Mid Range or low end TVs can work with motion adaptive or static up-conversion. If the (expensive) motion estimator is left out, the VMDP encoder might set the motion vector part of the protocol to zero vectors. The frame rate converter performs then a static up-conversion. In this case, the motion estimator, which can be a hardware add-on component to picture improvement system, which is implemented in software on a DSP, can be left out without changing the software implementation.

The range of applications of the present invention covers analog video processing systems, mixed (analog/digital) video processing systems, and digital video processing systems. Systems comprising local encoders as well as remote encoders (e.g. broadcasters) as well as systems comprising integrated or separated encoder/decoder (codec) systems are supported.

The invention describes a new system approach picture processing. In this system, all picture analysis components like motion estimation or segmentation are concentrated in a single picture analysis module. All picture-processing components like frame rate conversion or picture improvement are preferably also concentrated in a central picture-processing module. The analysis information is transferred with a Video Meta Data Stream. The centralisation saves computational power, removes redundant processing steps and makes analysis information available to all picture-processing components. The system is scalable because parts of the analysis/picture processing components can be left out/changed, without changing the respective other module. Quality can be increased/decreased in this way.

## Claims

1. Video signal processing system, comprising:
- a video signal or picture analysis module (VSAM) configured to generate analysis information, wherein video signal or picture analysis capabilities are concentrated and/or centralized in said video signal or picture analysis module (VSAM) by respective video signal or picture analysis components (5-11), in particular motion estimation and segmentation components;
- a video signal or picture processing module (VSPM) wherein video signal or picture processing capabilities are concentrated and/or centralized in said video signal or picture processing module (VSPM) by respective video signal or picture processing components using the same analysis information; and
- a video meta data transmission channel (VMDC, 3, 4) being adapted to connect said video signal or picture analysis module (VSAM) and said video signal or picture processing module (VSPM) so as to enable an exchange of video meta data based on the analysis information,
wherein said video meta data transmission channel (VMDC, 3, 4) comprises a backward channel (3) to transmit video quality data from said video signal or picture processing module (VSPM) to said video signal or picture analysis module (VSAM) for improving parameter settings of the video signal or picture analysis module (VSAM).

2. Video signal processing system according to claim 1,
wherein said video signal or picture processing module (VSPM) comprises frame rate conversion and picture improvement components.

3. Video signal processing system according to any one of the preceding claims,
wherein said video meta data transmission channel (VMDC, 3, 4) comprises a forward channel (3) to transmit said video meta data from said video signal or picture analysis module (VSAM) to said video signal or picture processing module (VSPM).

4. Video signal processing system according to any one of the preceding claims 1 to 3,
wherein said video meta data comprise picture analysis information, in order to process a video signal on the side of said video signal or picture processing module (VSPM).

5. Video signal processing system according to any one of claims 1 to 4,
said video quality data are adapted to provide a respective feedback to said video meta data received by the video signal or picture processing module (VSPM) from said video signal or picture analysis module (VSAM).

6. Video signal processing system according to any one of the preceding claims 1 to 5.
said video quality data comprise picture quality information to pre-process and/or analyse a video signal on the side of said video signal or picture analysis module (VSAM).

## Patentansprüche

1. Videosignalverarbeitungssystem, mit:
- einem Videosignal- oder Bildanalysemodul (VSAM), das konfiguriert ist, um Analyseinformationen zu erzeugen, wobei die Videosignal- oder Bildanalysefähigkeiten in dem Videosignal- oder Bildanalysemodul (VSAM) durch jeweilige Videosignal- oder Bildanalysekomponenten (5-11), insbesondere Bewegungsschätzungs- und -segmentierungskomponenten, konzentriert und/oder zentralisiert sind;
- einem Videosignal- oder Bildverarbeitungsmodul (VSPM), wobei die Videosignal- oder Bildverarbeitungsfähigkeiten in dem Videosignal- oder Bildverarbeitungsmodul (VSPM) durch jeweilige Videosignal- oder Bildverarbeitungskomponenten unter Verwendung derselben Analyseinformationen konzentriert und/oder zentralisiert sind; und
- einem Videometadaten-Übertragungskanal (VMDC, 3, 4), der dafür ausgelegt ist, das Videosignal- oder Bildanalysemodul (VSAM) und das Videosignal- oder Bildverarbeitungsmodul (VSPM) zu verbinden, um einen Austausch von Videometadaten anhand der Analyseinformationen zu ermöglichen,
wobei der Videometadaten-Übertragungskanal (VMDC, 3, 4) einen Rückwärtskanal (3) enthält, um Videoqualitätsdaten von dem Videosignal- oder Bildverarbeitungsmodul (VSPM) zu dem Videosignal- oder Bildanalysemodul (VSAM) zu übertragen, um Parametereinstellungen des Videosignal- oder Bildanalysemoduls (VSAM) zu verbessern.

2. Videosignalverarbeitungssystem nach Anspruch 1,
wobei das Videosignal- oder Bildverarbeitungsmodul (VSPM) Rahmenratenumsetzungs- und Bildverbesserungskomponenten enthält.

3. Videosignalverarbeitungssystem nach einem der vorhergehenden Ansprüche,
wobei der Videometadaten-Übertragungskanal (VMDC, 3, 4) einen Vorwärtskanal (3) enthält, um die Videometadaten von dem Videosignal- oder Bildanalysemodul (VSAM) zu dem Videosignal- oder Bildverarbeitungsmodul (VSPM) zu übertragen.

4. Videosignalverarbeitungssystem nach einem der vorhergehenden Ansprüche 1 bis 3,
wobei die Videometadaten Bildanalyseinformationen enthalten, um ein Videosignal auf Seiten des Videosignal- oder Bildverarbeitungsmoduls (VSPM) zu verarbeiten.

5. Videosignalverarbeitungssystem nach einem der Ansprüche 1 bis 4,
wobei die Videoqualitätsdaten dafür ausgelegt sind, eine entsprechende Rückkopplung für die Videometadaten zu schaffen, die durch das Videosignaloder Bildverarbeitungsmodul (VSPM) von dem Videosignal- oder Bildanalysemodul (VSAM) empfangen werden.

6. Videosignalverarbeitungssystem nach einem der vorhergehenden Ansprüche 1 bis 5,
wobei die Videoqualitätsdaten Bildqualitätsinformationen enthalten, um ein Videosignal auf Seiten des Videosignal- oder Bildanalysemoduls (VSAM) vorzuverarbeiten und/oder zu analysieren.

## Revendications

1. Système de traitement de signal vidéo, qui comprend :
- un module d'analyse de signal vidéo ou d'image (VSAM) configuré pour générer des informations d'analyse, dans lequel les capacités d'analyse de signal vidéo ou d'image sont concentrées et/ou centralisées dans ledit module d'analyse de signal vidéo ou d'image (VSAM) par des composants d'analyse de signal vidéo ou d'image respectifs (5-11), et en particulier des composants d'estimation et de segmentation de mouvement ;
- un module de traitement de signal vidéo ou d'image (VSPM) dans lequel les capacités de traitement de signal vidéo ou d'image sont concentrées et/ou centralisées dans ledit module de traitement de signal vidéo ou d'image (VSPM) par des composants de traitement de signal vidéo ou d'image respectifs qui utilisent les mêmes informations d'analyse ; et
- un canal de transmission de métadonnées vidéo (VMDC, 3, 4) adapté pour relier ledit module d'analyse de signal vidéo ou d'image (VSAM) et ledit module de traitement de signal vidéo ou d'image (VSPM) de façon à permettre un échange de métadonnées vidéo sur la base des informations d'analyse,
dans lequel ledit canal de transmission de métadonnées vidéo (VMDC, 3, 4) comprend un canal de retour (3) destiné à transmettre des données de qualité vidéo entre ledit module de traitement de signal vidéo ou d'image (VSPM) et ledit module d'analyse de signal vidéo ou d'image (VSAM) afin d'améliorer le paramétrage du module d'analyse de signal vidéo ou d'image (VSAM).

2. Système de traitement de signal vidéo selon la revendication 1,
dans lequel ledit module de traitement de signal vidéo ou d'image (VSPM) comprend des composants de conversion de fréquence d'image et d'amélioration de l'image.

3. Système de traitement de signal vidéo selon l'une quelconque des revendications précédentes, dans lequel ledit canal de transmission de métadonnées vidéo (VMDC, 3, 4) comprend un canal direct (3) destiné à transmettre lesdites métadonnées vidéo entre ledit module d'analyse de signal vidéo ou d'image (VSAM) et ledit module de traitement de signal vidéo ou d'image (VSPM).

4. Système de traitement de signal vidéo selon l'une quelconque des revendications 1 à 3,
dans lequel lesdites métadonnées vidéo comprennent des informations d'analyse d'image, afin de traiter un signal vidéo du côté dudit module de traitement de signal vidéo et d'image (VSPM).

5. Système de traitement de signal vidéo selon l'une quelconque des revendications 1 à 4, lesdites données de qualité vidéo étant adaptées pour fournir un retour respectif auxdites métadonnées vidéo reçues par le module de traitement de signal vidéo ou d'image (VSPM) de la part dudit module d'analyse de signal vidéo ou d'image (VSAM).

6. Système de traitement de signal vidéo selon l'une quelconque des revendications 1 à 5, lesdites données de qualité vidéo comprenant des informations de qualité d'image destinées à prétraiter et/ou à analyser un signal vidéo du côté dudit module d'analyse de signal vidéo ou d'image (VSAM).
